Europäisches Patentamt

European Patent Office

Office européen des brevets

(11) Veröffentlichungsnummer: **0 268 160**

**A1**

## (12) EUROPÄISCHE PATENTANMELDUNG

(21) Anmeldenummer: 87116361.4

(51) Int. Cl.⁴ **H02P 9/48 , H02P 9/04**

(22) Anmeldetag: 06.11.87

(30) Priorität: 17.11.86 CH 4583/86

(43) Veröffentlichungstag der Anmeldung:
25.05.88 Patentblatt 88/21

(84) Benannte Vertragsstaaten:
AT BE CH DE ES FR GB GR IT LI LU NL SE

(71) Anmelder: GEBRÜDER SULZER
AKTIENGESELLSCHAFT
Zürcherstrasse 9
CH-8401 Winterthur(CH)

(72) Erfinder: Zwicky, Ruedi, Prof.Dr.
Mittelstrasse 2
CH-5430 Wettingen (AG)(CH)
Erfinder: Weber, Thomas, Dipl.-El.Ing. ETH
Bombachstrasse 22
CH-8049 Zürich(CH)
Erfinder: Baumgartner, Dominik,
Dipl.-El.Ing.ETH
Pflanzschulstrasse 51
CH-8004 Zürich(CH)

(74) Vertreter: Troesch, Hans Alfred, Dr. Ing. et al
Walchestrasse 19
CH-8035 Zürich(CH)

(54) Verfahren und Anordnung zur Reduzierung mindestens eines Frequenzanteils einer periodischen Pulsation.

(57) Es wird vorgeschlagen, Pulsationen einer elektrischen Grösse am Ausgang eines mittels eines Dieselmotors betriebenen Synchrongenerators mit einer von der synchrongeneratoreigenen Frequenz abweichenden Frequenz auszuregeln. Hierzu wird eine der Pulsation entsprechende Regelgrösse (X) abgegriffen an der durch Dieselmotor (5), Generator (3) und Netz (4) gebildeten Strecke. Diese Regelgrösse (X) wird mit einer Führungsgrösse (W) zu einer Regeldifferenz (Δ) verrechnet, mit der eine Stellgrösse (y) an der genannten Strecke in regelndem Sinne gestellt wird.

FIG.1

## Verfahren und Anordnung zur Reduzierung mindestens eines Frequenzanteils einer periodischen Pulsation

Die vorliegende Erfindung betrifft ein Verfahren bzw. eine Anordnung zur Reduzierung mindestens eines Frequenzanteils einer periodischen Pulsation mindestens einer elektrischen Grösse am Ausgang eines mittels einer Antriebsmaschine getriebenen Synchrongenerators, wobei die Grundfrequenz der zu reduzierenden Pulsation von der synchrongeneratoreigenen Frequenz abweicht.

Im weiteren betrifft die vorliegende Erfindung eine Anwendung des Verfahrens bzw. der Anordnung für dieselmotorgetriebene Synchron-Grossgeneratoren.

Wird ein Synchrongenerator mit zeitlich pendelndem Moment angetrieben, so wirkt sich dieses auf die elektrischen Grössen am Ausgang, d.h. statorseitig des Generators, aus. Derartige Momentenschwankungen treten insbesondere beim Einsatz grosser Dieselmotoren für den Antrieb von Synchrongeneratoren und beim Einsatz von Windturbinen für deren Antrieb auf. Die Generatoren werden dabei mit relativ tiefen Drehzahlen von 60 bis 120 Umdrehungen pro Minute angetrieben.

Die Momentenpulsationen des den Synchrongenerator antreibenden Momentes sind im allgemeinen nicht sinusförmig, womit Pulsationsfrequenzen höherer Harmonischen entstehen, bezüglich der Pulsationsgrund frequenz, d.h. das Frequenzspektrum der Pulsation ist diskret mit mehreren Frequenzanteilen bzw. Spektrallinien, worunter auch einen Anteil auf der Grundfrequenz.

Je nach Frequenzverhalten des Synchrongenerators dessen Antriebswelle und dessen ausgangsseitigem Netz, werden ein oder mehrere dieser Anteile besonders verstärkt, aufgrund des Resonanzverhaltens der genannten Teilstrecken. Somit erscheint ausgangsseitig des Generators, im allgemeinen wiederum eine Pulsation mit verschiedenen Frequenzanteilen, wobei bestimmte dieser Frequenzanteile verstärkt in Erscheinung treten. Wenn im folgenden von zu reduzierendem Frequenzanteil der Pulsation ausgangsseitig des Synchrongenerators die Rede ist, deren Grundfrequenz von der synchrongeneratoreigenen Frequenz, d.h. Netzfrequenz abweicht, so ist damit diejenige Pulsations-Spektrallinie gemeint, die mit einer derart störenden Amplitude ausgangsseitig erscheint, dass sie reduziert werden sollte. Dabei kann im allgemeinen die Frequenz des meiststörenden Anteils zeitlich ändern, z.B. wenn sich das Resonanzverhalten der obgenannten Teilstrecken ändert, wie bei Belastungsänderungen netzseitig.

Ueblicherweise werden Synchrongeneratoren mit einer sog. P/f-Regelung ausgerüstet, mit deren Hilfe der Mittelwert, der an das Netz abgegebenen Wirkleistung konstant geregelt wird. Dies erfolgt durch Eingriff auf das Drehmoment der Antriebsmaschine.

Schwankungen der abgegebenen Wirkleistung P können dabei aber nur langsam ausgeregelt werden, wesentlich langsamer als dies zur Ausregelung des genannten, zu reduzierenden Pulsationsanteils notwendig wäre, mit einer Frequenz im Bereich weniger Hz. Wird ein derartiger Synchrongenerator als Kraftwerkgenerator am starren Netz betrieben, so ist im weiteren üblicherweise ein sog. Q/U-Regler vorgesehen. Ausgangsseitig des Generators wird die Blindleistung Q erfasst und durch Eingriff auf die Erregung des Generators, d.h. Stellen der Erregerspannung, der Blindleistungsmittelwert konstant geregelt. Auch diese Regelung kann im obgenannten Sinne wesentlich zu langsam sein.

Die genannten Momentenpulsationen der Antriebsmaschine bewirken am starren Netz Pulsationsamplituden von Wirkleistungsanteilen im Bereich von ca. 5 bis 20% der mittleren Wirkleistung, bei Pulsationsanteilsfrequenzen von einigen wenigen Hz.

Wird ein derartiges Kraftwerksystem im Inselbetrieb eingesetzt, so ist üblicherweise eine U-Regelung vorgesehen, welche die an das Netz abgegebene Spannung abgreift und durch Eingriff auf die Synchrongeneratorerregung konstant regelt. Hier bewirken die genannten Momentenpulsationen der Antriebsmaschine Spannungsanteilamplituden im Bereich von 10 Hz, in der Grössenordnung von 0,5% des Spannungsmittelwertes.

Sowohl am starren Netz, wie auch im Inselbetrieb, entstehen lastseitig durch die genannten Pulsationsanteile störende Effekte. Während sich beim Betrieb am starren Netz die genannten Pulsationen auf weitere, ans gleiche Netz aufgeschaltete Kraftwerke auswirken, die diese auszuregeln versuchen, ergeben sich im Inselbetrieb trotz der relativ kleinen Amplituden des genannten Anteils gerade im Bereich von 10Hz, beispielsweise an Beleuchtungen, störende Effekte, indem diese Frequenz im Bereich höchster Augensensibilität liegt, die ebenfalls im Bereich von 10 Hz liegt. Dort nimmt das Auge auch sehr geringe Schwankungsamplituden der Beleuchtung wahr. Die Auswirkungen der genannten Momentenpulsationen können, wie erwähnt, noch verstärkt erscheinen, wenn die Grundfrequenz der Momentenpulsation oder die Frequenz harmonischer Anteile an Resonanzstellen des Synchron generators mit nachgeschaltetem Netz oder an Resonanzstellen der Antriebswelle zwischen Antriebsmaschine und Synchrongenerator liegt.

Es ist nun beispielsweise aus der US-A-4 080 559, der US-A-4 463 306, der US-A-4 413 223 sowie IEEE, 1980, IECI Proceedings, "Applications of Mini and Microcomputers", Philadelphia, 17. - 20. März 1980, IEEE, (US), G.R. Phillips: "A microprocessorbased engine/generator control system", Seiten 377-380, weiter IEEE Transactions on Power Apparatus and Systems, Band PAS-103, Nr. 4. April 1984, IEEE, (New York, US), E.N. Hinrichsen: "Controls for variable pitch wind turbine generators), siehe Seiten 886 - 892 bekannt, Systemstabilisatoren an mittels Antriebsmaschinen getriebenen Synchrongeneratoren vorzusehen, mit deren Hilfe das Gesamtsystem grundsätzlich durch entsprechende nach Linksschiebung von Polstellen der System-Uebertragungsfunktion stabilisiert wird.

Wie aus der US-A 4 080 559 bekannt, ergibt sich aber bei Vorsehen derartiger Stabilisatoren das Problem, dass tiefe Eigenfrequenzen der mechanischen Kopplung angeregt werden, indem nun das Gesamtsystem mit den Stabilisatoren bei diesen tiefen Frequenzen mitgekoppelt wirkt.

In der genannten US-A wird dieses Problem dadurch gelöst, dass die Wirkung des Stabilisators bei diesen Eigenfrequenzen aufgehoben wird, derart, dass bei diesen Eigenfrequenzen der Regelkreis nicht wirksam und das System somit bei diesen Eigenfrequenzen ungeregelt arbeitet. Damit wird erzielt, dass die durch die Strecke Antriebsmaschine und Generator bewirkten Pulsationen auf diesen mechanischen Eigenfrequenzen nicht mehr angeregt werden, sondern entsprechend dem bei diesen Frequenzen nun offenen System ungedämpft, mehr oder weniger ausgeprägt ausgangsseitig erscheinen. Während somit, insbesondere gemäss dieser Schrift und generell in Zusammenhang mit Vorsehen von Stabilisatoren zur Stabilisierung der gesamten Anlage angestrebt wird, Pulsationen, die allenfalls auf derartigen mechanischen Eigenfrequenzen entstehen, nicht anzuregen, geht die vorliegende Erfindung grundsätzlich davon aus, dass Pulsationen mit derartig tiefen Grundfrequenzen nicht einfach ungedämpft belassen werden sollen, sondern reduziert werden sollen. Somit setzt sich die vorliegende Erfindung zum Ziel, die genannten Pulsationsanteile ausgangsseitig des Synchrongenerators zu reduzieren und dabei die Stabilität des Gesamtsystems zu erhalten.

Dies wird bei einem Verfahren eingangs genannter Art dadurch erreicht, dass man bei Antrieb des Synchrongenerators mit pulsierendem Antriebsmoment als Anregung den zu reduzierenden Pulsationsanteil, dessen Grundfrequenz derjenigen der Antriebsmomentpulsation entspricht, mindestens teilweise ausregelt, indem man

-den Anteil der elektrischen Grösse als Regelgrösse erfasst,

-aus der erfassten Regelgrösse und einer vorgebbaren Führungsgrösse eine Regeldifferenz ermittelt,

-in Funktion der Regeldifferenz mindestens eine physikalische Grösse einer durch die Antriebsmaschine, den Synchrongenerator und das dem Synchrongenerator nachgeschaltete Netz gebildeten Strecke im regelnden Sinne stellt.

Dabei wird von der Einsicht ausgegangen, dass an mittels einer Antriebsmaschine getriebenen Synchrongeneratoren bereits bekannterweise vorgesehene Regelungen, wie die erwähnte P/f-Regelung, die Q/U-Regelung bzw. die U-Regelung zu träge sind, um die genannten Anteile auszuregeln. Es wird weiter von der Erkenntnis ausgegangen, dass eine stabile erfindungsgemässe Regelung möglich ist, obwohl sie eine hohe Verstärkung des offenen Regelkreises bei der Anteilsfrequenz sicherstellen muss, also bei Frequenzen, die bezüglich des Strecken-Frequenzverhaltens, in erster Näherung mit Tiefpass-Charakteristik, hoch ist.

Wird der Synchrongenerator mittels eines Dieselmotors als Antriebsmaschine getrieben, so wird weiter vorgeschlagen, dass man mit der Regelung auf die Ursache der Pulsation und damit des Anteils eingreift, indem man momentane Betriebsverhältnisse an Dieselmotorzylindern als physikalische Grösse stellt, wie den Kraftstoff-Einspritzzeitpunkt und/oder die Kraftstoff-Einspritzmenge.

In einer weiteren Ausführungsvariante des erfindungsgemässen Verfahrens wird als physikalische Grösse die Synchrongeneratorerregung gestellt. Dies kann zusätzlich zum genannten Eingriff auf einen Dieselmotor als Antriebsmaschine erfolgen, wird aber insbesondere dann bevorzugt, wenn die Antriebsmaschine an sich keine oder keine leicht einzusetzende Möglichkeit für einen Stelleingriff bietet.

Wie bereits oben erwähnt, ist es, beispielsweise beim Betrieb eines Synchrongenerators am starren Netz, üblich, bereits eine Regelung für die Blindleistung Q vorzusehen. Nun braucht die Blindleistung Q keinesfalls diejenige elektrische Grösse am Ausgang des Synchrongenerators zu sein, deren Pulsationsanteile vornehmlich stören. Stören können beispielsweise Pulsationsanteile der Wirkleistung. Um beiden Bedürfnissen Rechnung zu tragen, wird weiter vorgeschlagen, dass man eine weitere elektrische Grösse als weitere Regelgrösse erfasst, daraus und einer weiteren Führungsgrösse eine weitere Regeldifferenz ermittelt und eine weitere physikalische Grösse an der Strecke, in Funktion der weiteren Regeldifferenz in regelndem Sinne stellt.

Nun ist bei Anlagen, bei denen an der Antriebsmaschine kein Stelleingriff möglich ist, die Anzahl weiterer möglicher Stelleingriffe an der Strecke beschränkt. Deshalb wird im weiteren vorgeschlagen, dass man als physikalische Grösse und als weitere physikalische Grösse auf dieselbe physikalische Grösse an der Strecke eingreift.

Hierzu wird weiter vorgeschlagen, dass man die Regelung der einen Regelgrösse und diejenige der weiteren Regelgrösse frequenzmässig entkoppelt, vorzugsweise die Regelung der einen Regelgrössenfrequenz selektiv auf der Frequenz des Anteils vornimmt, diejenige der weiteren Regelgrösse, breitbandig.

Eine weitere Ausführungsvariante des erfindungsgemässen Verfahrens ergibt sich dadurch, dass man als weitere physikalische Grösse eine ausgangsseitig des Synchrongenerators erscheinende Impedanz stellt, wie einen Blindleistungskompensator.

Damit wird eine weitere unabhängige Eingriffsmöglichkeit ausgenützt.

Insbesondere dann, wenn mit Regelung der einen Regelgrösse sowie Regelung einer weiteren Regelgrösse auf dieselbe Stellgrösse, wie auf die Erregung des Synchrongenerators eingegriffen wird, wird weiter vorgeschlagen, dass man bei der Anteilsfrequenz für beide Regelungen voneinander abhängige Führungsgrössen vorgibt.

Wird beispielsweise zur Pulsationsanteilsausregelung der Wirkleistung auf die Generatorerregung gegriffen, zudem auch für die Regelung des Blindleistungsmittelwertes, so wird das Problem, das dadurch entsteht, dass der Stell-Freiheitsgrad am Generator über die Erregung nur 1 ist, dadurch gelöst, dass beispielsweise der Wirkleistungsanteil nur frequenzselektiv ausgeregelt wird. Somit ergibt sich bei der Anteilsfrequenz die Situation, dass die Regelung bezüglich der zweiten weiteren Regelgrösse nur in Funktion der Wirkung der Anteilsregelung wirksam wird, womit durch Vorgabe der Führungsgrösse für die eine der Regelungen diejenige für die andere gegeben ist: Diese beiden Grössen können dann nur in Abhängigkeit voneinander gegeben werden. So kann dann mittels entsprechender Gewichtung, als Kompromiss, entschieden werden, wie stark Anteile der genannten Frequenz an beiden elektrischen Grössen noch in Erscheinung treten dürfen. Dieser Kompromiss wird durch Vorgabe voneinander abhängiger Führungsgrössen an den beiden Regelungen bestimmt.

Um im weiteren mit relativ einfachen Mitteln die Regelung bei der Anteilsfrequenz wirksam genug auszubilden und dabei trotzdem Stabilität des Gesamtregelkreises zu gewährleisten, wird weiter vorgeschlagen, dass man ein Wechselsignal mit einer Frequenz gleich der Frequenz des Anteils erzeugt - sind mehrere Anteile auszuregeln, analog mehrere Wechselsignale-und damit die physikalische Grösse stellt, dabei Amplitude und/oder Phase des Wechselsignals in Funktion der Regeldifferenz stellt.

Die Synthetisierung des genannten Wechselsignals auf der Anteilsfrequenz erzeugt an sich den - schnellen Stellsignalanteil, der nun in Funktion der Regeldifferenz amplituden-und/oder phasenverstellt wird. Die Uebertragungsglieder, die über Amplituden und/oder Phasenstellung auf das Wechselsignal wirken, können langsamer ausgebildet sein, als dies zur befriedigenden Regelwirkung bei der genannten Frequenz an sich notwendig wäre. Die Verstärkung des so gebildeten offenen Regelkreises weist bei dieser Frequenz selektiv eine hohe Verstärkung auf, nicht aber bei davon abweichenden Frequenzen, wodurch die obgenannten Stabilitätsprobleme umgangen werden.

Die Frequenz störender und damit zu reduzierender Pulsationsanteile ist des öftern bekannt. Schwankungen können aber durchaus auftreten, so z.B. weil die Antriebsdrehzahl schwankt oder sich veränderndes Resonanzverhalten der Teilstrecke, wie durch Aenderung der Netzimpedanz, eine Aenderung der Frequenzen mit sich bringt, bei denen Momentpulsationsanteile unannehmbar verstärkt am Ausgang des Synchrongenerators erscheinen. Deshalb wird weiter vorgeschlagen, dass man die momentane Frequenz des Anteils erfasst und damit die Frequenz des Wechselsignals führt.

Im weiteren wird bevorzugterweise das Wechselsignal aus zwei gewichtet addierten, orthogonalen Wechselsignalanteilen erzeugt.

Das die physikalische Grösse an der Strecke stellende Wechselsignal muss zum Ausregeln des zu reduzierenden Anteils am Ausgang des Generators sowohl bezüglich Amplitude wie auch bezüglich Phase, einstellbar sein. Hierzu wird in einer Variante vorgeschlagen, dass man sukzessive Amplitude und Phase des Wechselsignals stellt, dabei die Regeldifferenz beobachtet und sukzessive minimalisiert.

Wird die physikalische Grösse als Stellgrösse mit dem erwähnten Wechselsignal moduliert, erst mit frei vorgegebener Amplitude und Phase und wird nun die Phase des Wechselsignals verstellt, so lässt sich an der Regeldifferenz beobachten, dass der Amplitudenwert auf der Anteilsfrequenz von einem Minimum zu einem Maximum bzw. umgekehrt verstellt wird. Somit kann vorerst die richtige Phasenlage des Wechselsignals als Stellsignal für die physikalische Grösse durch Verändern der Wechselsignalphase und Beobachtung von Signalanteilen der Anteilsfrequenz eingestellt werden, daraufhin die Wechselsignalamplitude, bis die Regeldifferenz minimal ist.

Eine einfache Realisation des Wechselsignals ergibt sich bevorzugterweise durch Programmie-

rung der Ausdrücke

$$\ddot{z} + \omega_{pn}^2 = \Delta(\omega_{pn}) \quad (1)$$

$$u' = \alpha_1 \dot{z} + \alpha_2 z \quad (2)$$

wobei bedeuten:

$\omega_{pn}$: die Kreisfrequenz des zu reduzierenden Pulsationsanteils,

$\Delta(\omega_{pn})$: die Regeldifferenz,

z: eine Hilfszustandsgrösse, $\dot{z}$ und $\ddot{z}$ deren erste bzw. zweite zeitliche Ableitung,

$\alpha_1$, $\alpha_2$: Koeffizienten, vorzugsweise streckenspezifisch einstellbar,

u': das Wechselsignal zum Stellen der physikalischen Grössen.

Im weiteren wird bevorzugterweise vorgeschlagen, dass man die Regelung im Zustandsraum vornimmt und mindestens die Regelgrösse bzw. die Regelgrössen als Ausgangsgrösse(n) der Strecke, mindestens die physikalische Grösse(n) als Eingangsgrösse(n) dieser Strecke einsetzt.

Da - bei der Zustandsregelung - sich der Zustandsvektor, der durch Synchrongenerator und dessen Belastung allenfalls zuzüglich der Antriebsmaschine gebildeten Strecke aus Messungen elektrischer Grössen am Synchrongenerator im allgemeinen nicht direkt ergibt, wird weiter vorgeschlagen, dass man über einen Beobachter aus den Eingangs-und den Ausgangsgrössen die Streckenzustandsgrössen ermittelt.

Eine erfindungsgemässe Anordnung obgenannter Art zur Lösung der genannten Aufgaben zeichnet sich dadurch aus, dass bei Antrieb des Synchrongenerators mit einem pulsierenden Antriebsmoment als Anregung, dessen Grundfrequenz derjenigen der Pulsation entspricht, eine mindestens auf der Frequenz des zu reduzierenden Anteils wirksame Regelung vorgesehen ist, mit

    a) einer eingangsseitig mit der aus Antriebsmaschine, Synchrongenerator und davon gespiesenem Netz gebildeten Strecke verbundenen Aufnahmeeinrichtung zur Aufnahme mindestens eines Signals als Regelgrössensignal, das mit dem zu reduzierenden Anteil in einem Abhängigkeitsverhältnis steht,

    b) einer mit dem Ausgang der Aufnahmeeinrichtung verbundenen Reglereinrichtung,

    c) mindestens einer mit dem Ausgang der Reglereinrichtung verbundenen Stellereinrichtung, die ausgangsseitig mindestens eine physikalische Grösse an der Strecke stellt, von der mindestens der Anteil abhängt.

Bevorzugte Ausführungsvarianten der erfindungsgemässen Anordnung sind in den Ansprüchen 20 bis 34 spezifiziert.

Das erfindungsgemässe Verfahren bzw. die erfindungsgemässe Anordnung eignet sich insbesondere für den Einsatz für dieselmotor-oder windturbinengetriebene Synchrongrossgeneratoren.

Die Erfindung wird anschliessend beispielsweise anhand von Figuren erläutert

Es zeigen:

    Fig. 1 eine prinzipielle Darstellung der erfindungsgemässen Regelung,

    Fig. 2a beispielsweise und qualitativ das Frequenz-Linienspektrum eines an der Anordnung gemäss Fig. 1 pulsierenden Momentes M,

    Fig. 2b beispielsweise und qualitativ das Frequenz-verhalten einer Signalübertragung zwischen einem Stellsignal y und einer Regelgrösse X an der Anordnung gemäss Fig. 1,

    Fig. 2c das aus den Darstellungen gemäss Fig. 2a und 2b resultierende, qualitative Frequenz-Linienspektrum der Regelgrösse X bzw. der zu regelnden elektrischen Grösse E an der Anordnung gemäss Fig. 1,

    Fig. 3 anhand von Funktionsblockdiagrammen eine erste Ausführungsvariante des erfindungsgemässen Verfahrens bzw. der erfindungsgemässen Anordnung,

    Fig. 4 ein Blockdiagramm einer weiteren Ausführungsvariante der erfindungsgemässen Regelung im Zustandsraum,

    Fig. 5 eine bevorzugte Ausführungsvariante eines Schwingers an einem Regler gemäss den Fig. 1 oder 3 oder 4.

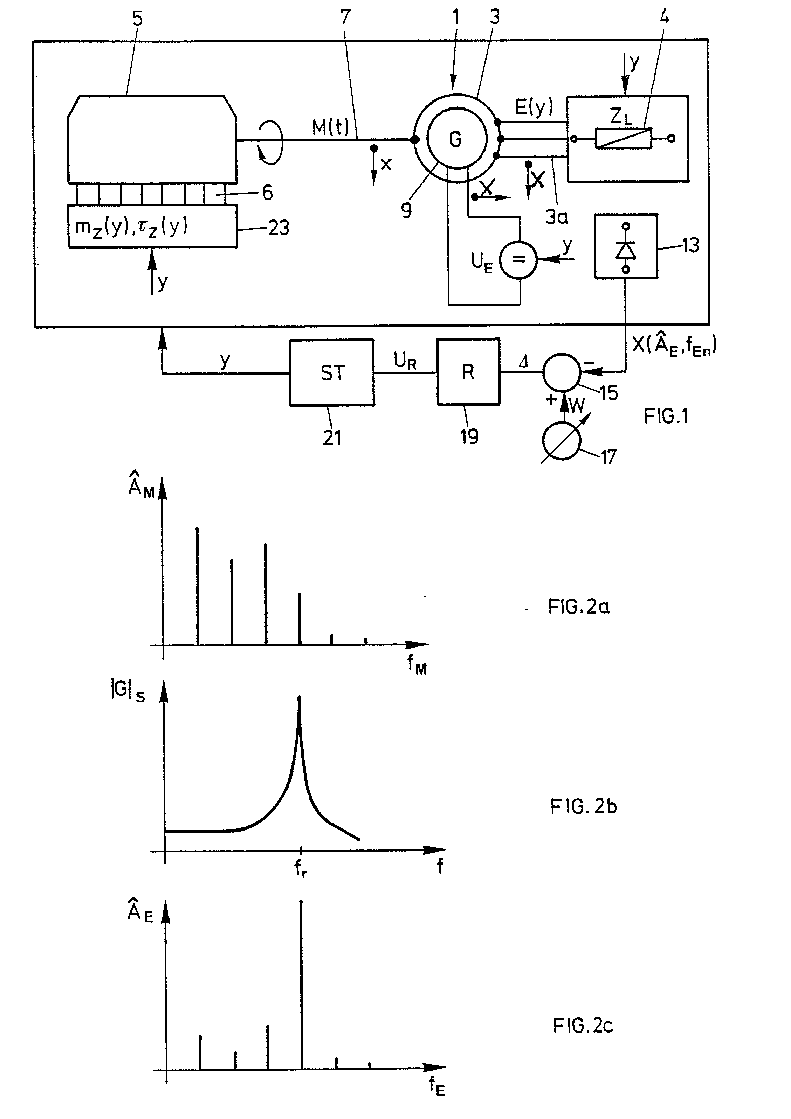

Gemäss Fig. 1 wird ein Synchrongenerator 1 mit Stator 3 und netzseitigem, dreiphasigem Ausgang 3a durch eine Antriebsmaschine, wie einen Gross-Dieselmotor 5, der relativ langsam umläuft, über eine Antriebsachse 7 angetrieben. Der Läufer 9 des Synchrongenerators 1 wird mit Gleichspannung $U_E$ betrieben, aus einer Quelle 11. Bei Quelle 11 kann es sich um eine statische Erregung mit Stromrichtern oder um eine rotierende Erregermaschine mit Hilfserregung handeln. Es kann sich beim Synchrongenerator 1 aber auch um einen Selbsterreger-Synchrongenerator handeln, wobei dann die Quelle 11 durch netzseitig aufgeschaltete Gleichrichter am Generator 1 gebildet ist. Wirkt die Antriebsmaschine 5, wie der erwähnte Diesel-Grossmotor mit einem zeitlich pendelnden Moment M(t) auf den Synchrongenerator 1, so pulsiert am Ausgang 3a mindestens eine elektrische Grösse E. Beim Diesel-Grossmotor kann das sich zeitlich ändernde Moment, beispielsweise durch Betriebsasymmetrien der einzelnen Zylinder 6 bewirkt sein. Die periodische Pulsation des Antriebsmomentes M(t) ist im allgemeinen nicht sinusförmig und weist somit ein Frequenzlinienspektrum, wie beispielsweise in Fig. 2a dargestellt,

auf, mit Amplituden $\hat{A}_M$ der einzelnen Pulsations-Frequenzanteile.

In Fig. 2b ist qualitativ beispielsweise das Frequenzverhalten der Uebertragung zwischen pulsierendem Antriebsmoment M(t) und der interessierenden elektrischen Grösse E am Ausgang des Synchrongenerators 1 dargestellt. Weist, wie dargestellt, dieses Uebertragungsverhalten Resonanzstellen auf, wie bei der Frequenz $f_r$, so erscheint, wie in Fig. 2c dargestellt, der entsprechend gelegene Frequenzanteil der Momentenpulsation gemäss Fig. 2a an der interessierenden elektrischen Grösse ausgangsseitig des Generators 1 verstärkt. Welcher Frequenzteil an der ausgangsseitig interessierenden elektrischen Grösse am meisten stört, ist von Fall zu Fall zu entscheiden. Es kann sich, wie gezeigt, um den Grundfrequenz-Anteil der Momentenpulsation handeln, aber auch um einen, allenfalls durch das Frequenzverhalten der genannten Strecke verstärkten, harmonischen Anteil bezüglich dieser Grundfrequenz.

Ist der Generator 1 an ein starres Netz 4 geschaltet, und dabei mit einer Q/U-Regelung versehen, so ist die mit dem Antriebsmoment pulsierende elektrische Ausgangsgrösse E die Wirkleistung P, im Inselbetrieb ist es die Klemmenspannung U des Generators 1.

Wie nun in Fig. 1 generell weiter dargestellt, wird erfindungsgemäss an der gesamten Strecke zwischen Antriebsmaschine 5 und Netz 4 mindestens ein Regelgrössensignal X mittels einer Detektoreinheit 13 erfasst, wobei die erfasste Grösse X in einer Abhängigkeit zu der bezüglich Pulsationen auszuregelnden elektrischen Ausgangsgrösse E steht. Es wird dabei generell von "einem Abhängigkeitsverhältnis" gesprochen, weil es in diesem Zusammenhang unwesentlich ist, ob die erfasste Grösse X kausal von der elektrischen Grösse E abhängt oder umgekehrt.

Die erfasste elektrische Grösse X ist ein Mass für die Amplitude $\hat{A}_E$ des an der elektrischen Grösse E interessierenden Frequenzanteiles bei der Frequenz $f_E$.

Bei der erfassten Grösse X kann es sich beispielsweise um das pulsierende Antriebsmoment M(t) selbst um die Pulsation an der interessierenden elektrischen Grösse E oder allenfalls über Rückwirkung entstehende Pulsationen im Erregerstromkreis des Generators 1 handeln. Auch mechanische Vibrationen können als mittels der Detektoreinheit 13 erfassten Regelgrössensignale X eingesetzt werden. Bezüglich Frequenz muss betont werden, dass das erfasste Regelgrössensignal X nicht unbedingt auch signifikante Anteile auf der Frequenz aufweisen muss, beispielsweise $f_r$ gemäss Fig. 2, die dem ausgangsseitig meist störenden Frequenzanteil entspricht.

An einer Differenzeinheit 15 wird das Regelgrössensignal X mit einem an einer Einstelleinheit 17 vorgebbaren entsprechenden Führungsgrössensignal W verglichen. die ausgangsseitig der Differenzeinheit 15 erscheinende Regeldifferenz $\Delta$ über einen Regler 19 in ein Steuersignal $U_R$ für eine Stelleinrichtung 21 gewandelt, an deren Ausgang ein Stellgrössensignal Y erscheint. Die Stelleinrichtung 21 greift mit dem Stellgrössensignal Y wiederum auf die Strecke zwischen Antriebsmaschine 5 und Netz 4 ein. Bei dem Stellgrössensignal Y kann es sich um eine oder mehrere der folgenden physikalischen Grössen handeln:

-die zylinderspezifische Kraftstoff-Einspritzmenge $m_z(Y)$,

-den zylinderspezifischen Einspritzzeitpunkt $\tau_z(Y)$, beides einstellbar an einer entsprechend steuerbaren Einspritzsteuerung 23, am Diesel-Grossmotor 5,

-um die Erregerspannungsquelle 11,

-um die ausgangsseitig des Synchrongenerators 1 erscheinende Impedanz 4.

Das Stellgrössensignal Y wird zur Ausregelung des grundharmonischen Frequenzanteiles und/oder höherer Frequenzanteile, an der interessierenden elektrischen Grösse E Signalanteile mindestens der Grundfrequenz aufweisen müssen. Um in Anbetracht der allenfalls kleinen und doch störenden Amplitudenwerte der störenden Anteile deren Ausregelung zu bewirken, wird mindestens bei der Grundfrequenz die Verstärkung des offenen Regelkreises wesentlich grösser als Eins sein müssen. Dies stellt in Anbetracht des Frequenzverhaltens der Strecke mit Synchrongenerator und nachgeschalteter Netzimpedanz bezüglich Stabilität Probleme. Deshalb wird vorzugs weise am Regler 19 ein Wechselsignal synthetisiert, dessen Amplitude und Phase in Funktion der Regeldifferenz $\Delta$ so gestellt wird, dass letztere minimal wird. Dadurch wird eine frequenzselektive Regelung vorgenommen, die Stabilitätsprobleme genannter Art zu lösen erlaubt, die dann auftreten, wenn der offene Regelkreis eine gleichmässig hohe Verstärkung bis hin zu mindestens der Pulsations-Grundfrequenz aufweisen würde.

Die Phase des am Regler 19 synthetisierten Wechselsignals muss nach Massgabe der Phasenverschiebung zwischen Reglerausgang und mittels der Detektoreinheit 13 detektiertem Regelgrössensignal X vorgenommen werden, die massgeblich durch den Synchrongenerator 1 und die Netzimpedanz 4 beeinflusst wird. Sie ist im allgemeinen nicht vorbekannt und kann, wie bei Aenderungen der Netzimpedanz, zeitvariabel sein. Neben der genannten Phase des Wechselsignals muss selbstverständlich auch dessen Amplitude zur Minimalisierung der Regeldifferenz gestellt werden.

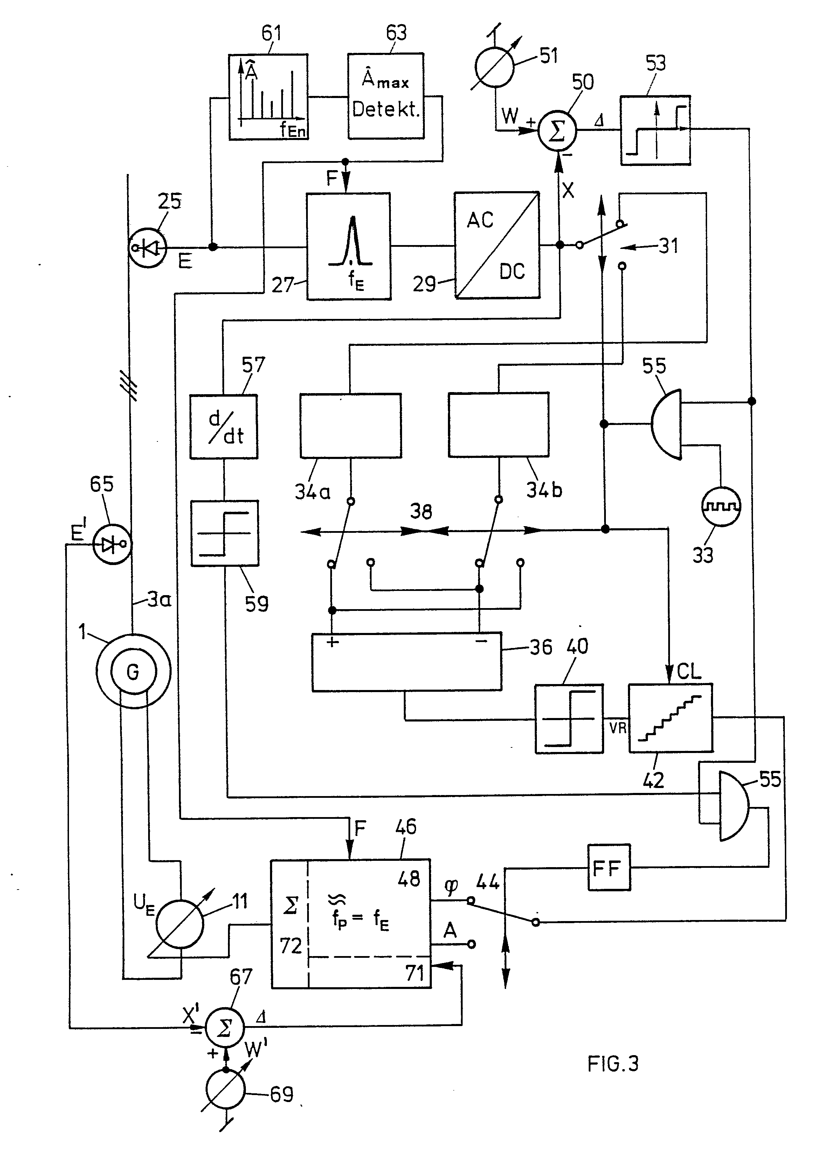

In Fig. 3 ist eine erste Ausführungsvariante der vorliegenden Erfindung dargestellt, bei der durch zeitlich getrenntes Verstellen von Phase und Amplitude bei gleichzeitiger Beobachtung der Reaktion an der Regelgrösse die Ausregelung vorgenommen wird. Da des öftern der Fall auftritt, bei welchem ein Stelleingriff an der Antriebsmaschine, wie am Gross-Dieselmotor 5 nicht möglich ist, wird im weiteren bevorzugterweise als Stellgrössensignal die Erregerspannung $U_E$ des Synchrongenerators eingesetzt.

Dabei ist zu beachten, dass dann, wenn nicht direkt auf die Ursache der genannten Pulsationen eingegriffen werden kann, wie auf den Betrieb der Dieselmotorzylinder, die Regelung so vorgenommen wird, dass nun mit der Stellgrösse mit derselben Frequenz eingegriffen wird, wie die Frequenz des an der elektrischen Grösse E störenden Frequenzanteils.

Ausgangsseitig des Generators 1 wird gemäss Fig. 3 die elektrische Grösse E mittels einer generell dargestellten Aufnahmeeinrichtung 25 erfasst und die Amplitude des auszuregelnden Frequenzanteiles an einer freuquenzselektiven Filtereinheit 27 und einer nachgeschalteten AC/DC-Wandlereinheit 29 ermittelt. Ein dem AC/DC-Wandler nachgeschalteter Umschalter 31, gesteuert durch einen Taktgenerator 33, schaltet den Ausgang des AC/DC-Wandlers abwechselnd auf Speichereinheiten 34a und 34b. Die Ausgänge der Speichereinheiten 34 sind einer Komparatoreinheit 36 zugeführt, dies über eine Umschaltereinheit 38, ebenfalls vom Generator 33 angesteuert. Somit werden Amplitudenwerte des Frequenzanteils abwechselnd in die Speicher 34 eingegeben und der Komparator 36 mit der Umschaltereinheit 38 vergleicht jeweils einen früheren Amplitudenwert mit einem späteren. Die Polarität des über einen Nullkomparator 40 geführten Ausgangssignals des Komparators 36 zeigt an, ob ein früherer Amplitudenwert grösser ist als ein späterer oder umgekehrt. Der Ausgang des Nullkomparators 40 ist auf einen Steuereingang VR eines Funktionsgenerators 42 geführt.

Der Funktionsgenerator 42, getaktet durch den Generator 33 an einem Takteingang CL, erzeugt an seinem Ausgang ein Signal, das bei jedem Taktimpuls des Generators 33 um ein Inkrement verändert wird, wobei die Richtung dieser Veränderung in zunehmendem oder abnehmendem Sinn durch das Signal am Steuereingang VR gesteuert wird. Ueber einen Umschalter 44 ist der Ausgang des Funktionsgenerators 42 auf einen Amplitudensteuereingang A bzw. einen Phasensteuereingang $\phi$ des noch zu beschreibenden Reglers 46 geführt. Der Regler 46 umfasst einen Schwinger 48, welcher auf der Frequenz des auszuregelnden Frequenzanteils an der elektrischen Grösse E schwingt. Amplitude und Phase dieses Schwingers 48 sind über die genannten Eingänge A und $\phi$ verstellbar. Ausgangsseitig wirkt der Regler 46 auf die modulierbare Quelle 11 für die Erregerspannung $U_E$ des Synchrongenerators 1. Der Ausgang des AC/DC-Wandlers 29 wird im weiteren als Regelgrössensignal X einer Vergleichseinheit 50 zugeführt, welcher im weiteren ein an einer Einstelleinheit 52 einstellbares Führungsgrössensignal W zugeführt wird. Die ausgangsseitig der Differenzeinheit 50 erscheinende Regeldifferenz $\Delta$ wird einem Fensterkomparator 53 zugeführt. Der Ausgang des Fensterkomparators 53 steuert über logische UND-Verknüpfungseinheiten 55 das Aufschalten des Taktsignals vom Generator 33 an die entsprechenden Umschalteinheiten 31, 38 bzw. 44.

Die bis dahin beschriebene Anordnung arbeitet wie folgt: Weicht die erfasste Amplitude am Ausgang des AC/DC-Wandlers 29 mehr als einen vorgegebenen Wert vom SOLL-Wert, entsprechend dem Führungssignalwert W ab, so wird der Taktgenerator 33 wirksam geschaltet. Je nach Vergleichsresultat an der Komparatoreinheit 36 wird, beispielsweise vorerst am Phasensteuereingang $\phi$, ein sich schrittweise veränderndes Steuersignal angelegt und somit die Phase des Schwingers 48 am Regler 46 so gestellt, dass sich die erfasste Amplitude ausgangsseitig des AC/DC-Wandlers 29 mehr und mehr dem Führungswert W nähert. Dadurch wird vorerst ein durch alleinige Verstellung der Phase erreichbares relatives Amplitudenminimun angelaufen und schliesslich durchlaufen. Letzteres wird beispielsweise mittels einer Differentiationseinheit 57 am Ausgang des AC/DC-Wandlers 29 und eines nachgeschalteten Nullkomparators 59 registriert: Wird durch sequentielle Phasenverstellung ein Amplitudenminimum durchlaufen, so schaltet das Ausgangssignal des Nullwertkomparators 59, sofern der Amplitudenwert immer noch ausserhalb des Toleranzfensters entsprechend dem Fenster am Fensterkomparator 53 bezüglich des Führungswertes W liegt, den Umschalter 44 auf den Amplitudensteuereingang A am Schwinger 48 um. Nun wird durch schrittweise Aenderung des Amplitudenwertes nach Massgabe des Vergleichs an der Komparatoreinheit 36, ob der momentane Amplitudenwert bezüglich des vorangehend erfassten abnimmt oder nicht, die Amplitude des am Schwinger 48 erzeugten Wechselsignals so lange verändert, bis wiederum ein Amplitudenminimum detektiert wird. Liegt dann das Regelgrössensignal X entsprechend der IST-Amplitude immer noch ausserhalb des durch den Fensterkomparator 53 vorgebbaren Wertes bezüglich des Führungssignals W. so wird weiter abwechselnd eine Amplituden-und Phasenverstellung vorgenommen. Ist die Abweichung des Amplitudenwertes entsprechend dem Regelgrössensignal X vom Führungssignalwert W kleiner als am Fensterkomparator 53 vorgegeben, so wird dieser Vorgang unterbrochen, die Phasen-und Amplitudeneinstellung am Schwinger 48 bleibt konstant. Hierzu sind selbstverständlich den beiden Steuereingängen $\phi$ und A (nicht dargestellt) Halteglieder für das zuletzt aufgeschaltete Steuersignal zugeordnet.

Auch bei zeitkonstanter Grundfrequenz der Momentenpulsation des Antriebsmomentes M(t) gemäss Fig. 1 kann zeitvariantes Frequenzverhalten der Strecke mit dem Synchrongenerator 1 und nachgeschalteter Netzimpedanz 4 mit Veränderung seiner Resonanzstellen dazu Anlass geben, dass am elektrischen Signal E Frequenzanteile auf sich ändernden Frequenzen als störend empfunden werden. Veränderung des genannten Resonanzverhaltens kann beispielsweise bei Veränderung der netzseitig am Generator erscheinenden Impedanz gemäss 4 von Fig. 1 auftreten.

Ein anderer Fall, bei welchem die Frequenz des auszuregelnden Frequenzanteiles zeitlich variieren kann, ist bei zeitlich variabler Grundfrequenz der Momentenpulsation, beispielsweise bei Variierung der Antriebsdrehzahl. Um generell die mögliche Zeit varianz der Frequenz des auszuregelnden Frequenzanteils an der elektrischen Grösse E ausgangsseitig des Synchrongenerators zu berücksichtigen, wird die Frequenz frequenzselektiver Einheiten, wie des Filters 27 und des Schwingers 48 in Fig. 3 dieser Frequenz nachgeführt. In Fig. 3 ist die Anordnung dargestellt, wenn bei konstanter Momentenpulsations-Grundfrequenz, durch Veränderung des Strecken-Frequenzverhaltens, die Amplitudenwerte der Frequenzanteile an der Grösse E derart ändern, dass zu gewissen Zeiten der eine Frequenzanteil, zu anderen ein oder mehrere andere Frequenzanteile auszuregeln sind. Hierzu wird das Ausgangssignal des Detektors 25 einer Spektralanalyse an einer Analyseeinheit 61 unterzogen, an einer Selektionseinheit 63, aus den verschiedenen Frequenzanteilen derjenige Anteil nach vorgegebenen Kriterien selektioniert, der am meisten stört. Einfachheitshalber kann dies derjenige Anteil mit grösster Amplitude sein. Am Ausgang der Selektionseinheit 63 erscheint ein Frequenz-Steuersignal, welches an der Anordnung vorgesehene, frequenzselektive Einheiten bezüglich ihrer selektierten Frequenz steuert, gemäss Fig. 3 das Filter 27 sowie den Schwinger 48 und zwar auf die Frequenz des momentan meiststörenden Anteils.

Gemäss Fig. 3 wird nun beispielsweise im Rahmen bereits bekannterweise vorhandener Regelungen, wie einer Q/U-Regelung, eine weitere elektrische Grösse E' am Ausgang des Generators 1 mittels einer Aufnahmeeinheit 65 erfasst. Sie wird als weitere Regelgrösse X' wiederum einer Differenzeinheit 67 zugeführt, der ein an einer Einstelleinheit 69 einstellbares weiteres Führungsgrössensignal W' zugespiesen wird. Die ausgangsseitig der Differenzeinheit 67 erscheinende Regeldifferenz wird ebenfalls dem Regler 46 zugeführt. Am Regler ist parallel zum Schwinger 48 eine weitere Reglerstufe 71 vorgesehen, die über eine ausgangsseitige Summationsstufe 72 ebenfalls auf die Erregung an der Quelle 11 des Generators 1 eingreift. Da zur Ausregelung zweier Regelgrössen, nämlich des Pulsationsanteils auf der Frquenz $f_E$ einer elektrischen Grösse, wie der Wirkleistung, und zur Ausregelung einer weiteren Regelgrösse, entsprechend E', wie der Blindleistung, dieselbe Stellgrösse, nämlich die Erregung $U_E$ des Generators 1 gestellt wird, muss aus Ermangelung eines zweiten Stellfreiheitsgrades ein Kompromiss bezüglich der erzielbaren Regelwirkungen geschlossen werden. Wird beispielsweise eine praktisch vollständige Ausregelung des Pulsationsanteils an der Wirkleistung angestrebt, so muss in Kauf genommen werden, dass bei der Frequenz $f_E$ dieses Anteils die Blindleistung entsprechend E' kaum geregelt wird, womit dann die entspechenden Pulsationsanteile in der Blindleistung auftreten. Durch abhängiges Einstellen der beiden Führungssignalwerte W und W' bei dieser Frequenz $f_E$ wird vorgegeben, wieweit der Frequenzanteil in der einen Grösse ausgeregelt wird bzw. ein wie grosser Anteil auf dieser Frequenz an der anderen elektrischen Grösse in Kauf genommen wird.

Anstelle des Eigriffes auf die Generatorerregung $U_E$ zur Regelung der zweiten Regelgrösse entsprechend E' bzw. X' kann, wie bereits anhand von Fig.1 besprochen, ein weiterer Stelleingriff ausgenützt werden, nämlich die ausgangsseitig des Generators 1 erscheinende Impedanz, indem beispielsweise ein Blindleistungskompensator als Stellglied gestellt wird.

Für die Realisierung der beschriebenen Regelung eignet sich in einer weiteren Ausführungsvariante insbesondere und bevorzugterweise eine Zustandsregelung.

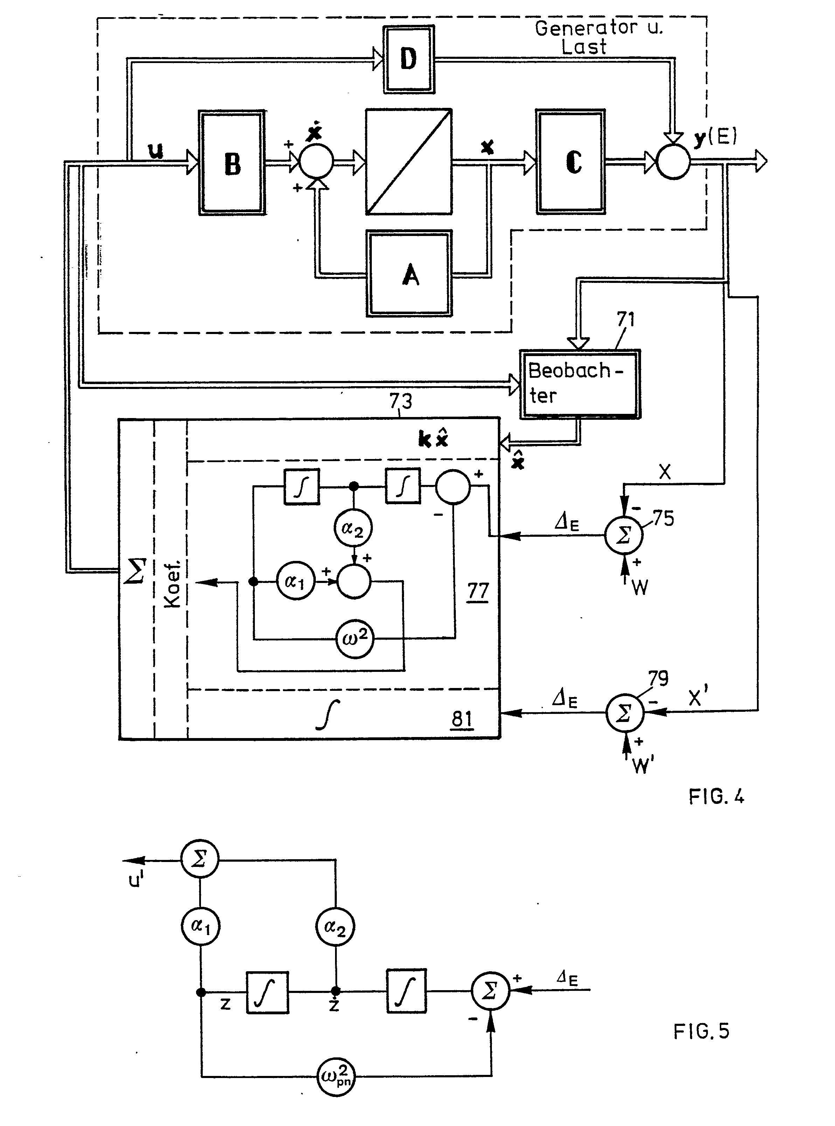

Gemäss Fig. 4 wird hierzu die Strecke aus Synchrongenerator 1 und Last durch die Eingangsmatrix **B**, die Ausgangsmatrix **C**, die Systemmatrix **A** sowie allenfalls die Durchgangsmatrix **D** dargestellt. Der Eingangs-bzw. Steuervektor **u** entspricht im vorliegenden Fall der Generatorerregung $U_E$. Es bezeichnen weiter der Vektor **x** den Zustandsvektor der Strecke, **x̄** dessen zeitliche Ableitung, der Ausgangsvektor **y** entspricht den ausgangsseitig des Synchrongenerators messbaren elektrischen

Grössen E, wie Strom, Spannungsgrössen. Da der Zustandsvektor x nicht dem Ausgangsvektor y entspricht, wird der Zustandsvektor $\hat{x}$ aus dem Ausgangsvektor y und dem Steuervektor u mittels eines Beobachters 71 geschätzt. Der Beobachter 71, den man als Modell der Strecke auffassen kann, ermittelt aus dem ihm zugeführten Ausgangsvektor y und dem Eingangsvektor u den Zustandsvektor $\hat{x}$, indem er die Differenz zwischen gemessenem y und aus u gerechnetem $\hat{y}$ minimalisiert. Der Zustandsvektor x wird der Reglereinrichtung 73 zugeführt und dort mit Koeffizienten k multipliziert. Die eine elektrische Grösse, wie die Wirkleistung, woran der Pulsationsanteil auszuregeln ist, wird weiter als eine Ausgangsgrösse X abgegriffen, einer Differenzeinheit 75 zugeführt und dort mit dem einstellbaren Führungsgrössensignal W' verglichen. Die resultierende Regeldifferenz $\Delta_E$ wird dem amplituden-und phasenstellbaren Schwinger 77 an der Reglereinrichtung 73 zugeführt.

Als weitere Regelgrösse X' wird eine weitere elektrische Grösse am Ausgang des Generators abgegriffen, wie die Blindleistung, und einer Differenzeinheit 79 zugeführt. An der Differenzeinheit 79 wird eine weitere Regeldifferenz $\Delta_E$ gebildet, die einer weiteren Reglerstufe 81, wie einem Integrator an der Reglereinrichtung 73 zugeführt wird. Der mit den Koeffizienten k multiplizierte Zustandsvektor $\hat{x}$, der Ausgang des Schwingers 77 und derjenige der Reglerstufe 81 werden schliesslich über weitere Koeffizienten gewichtet addiert und steuern ausgangsseitig der Reglereinrichtung 73 den Eingangsvektor u der Strecke, die Generatorerregung.

Zur Klarstellung muss darauf hingewiesen werden, dass die interessierenden elektrischen Grössen E, E' Komponenten des Ausgangsvektors y sind.

In Fig. 5 ist die bereits in Fig. 4 angedeutete Struktur des Schwingers 77 an der Reglereinrichtung 73 dargestellt. Es handelt sich um eine analog oder digital programmierte Differential-Gleichungsstruktur mit Programmierung der Ausdrücke

$$\ddot{z} + \omega^2_{pn} = \Delta(\omega_{pn}) \quad (1)$$

$$u' = \alpha_1 \dot{z} + \alpha_2 z \quad (2)$$

wobei bedeuten:

$\omega_{pn}$: die Kreisfrequenz des zu reduzierenden Pulsationsanteils,

$\Delta(\omega_{pn})$: die Regeldifferenz,

z: eine Hilfszustandsgrösse, $\dot{z}$ und $\ddot{z}$ deren erste bzw. zweite zeitliche Ableitung,

$\alpha_1, \alpha_2$: Koeffizienten, vorzugsweise streckenspezifisch einstellbar,

u': das Wechselsignal zum Stellen der physikalischen Grössen.

Mit dem Koeffizienten $\alpha_1$ und $\alpha_2$, die streckenspezifisch vorgegeben werden, wird die Phasenlage des Ausgangs-Wechselsignals u' eingestellt.

Die vorgeschlagene Regelung eignet sich insbesondere für den Einsatz an Synchrongeneratoren im Inselbetrieb, wie auch am starren Netz und vermag die eingangs erwähnten Pulsationen kleiner Amplitude ohne weiteres auszuregeln, insbesondere auch bei variabler netzseitiger Belastung des Generators.

## Ansprüche

1. Verfahren zur Reduzierung mindestens eines Frequenzanteils einer periodischen Pulsation mindestens einer elektrischen Grösse am Ausgang eines mittels einer Antriebsmaschine getriebenen Synchrongenerators, wobei die Grundfrequenz der zu reduzierenden Pulsation von der synchrongeneratoreigenen Frequenz abweicht, dadurch gekennzeichnet, dass man bei Antrieb des Synchrongenerators mit pulsierendem Antriebsmoment als Anregung den zu reduzierenden Pulsationsanteil, dessen Grundfrequenz derjenigen der Antriebsmomentpulsation entspricht, mindestens teilweise ausregelt, indem man

-den Anteil der elektrischen Grösse als Regelgrösse erfasst,

-aus der erfassten Regelgrösse und einer vorgebbaren Führungsgrösse eine Regeldifferenz ermittelt,

-in Funktion der Regeldifferenz mindestens eine physikalische Grösse einer durch die Antriebsmaschine, den Synchrongenerator und das dem Synchrongenerator nachgeschaltete Netz gebildeten Strecke in regelndem Sinne stellt.

2. Verfahren, vorzugsweise nach mindestens einem der Ansprüche, wie nach Anspruch 1, mit einem Dieselmotor als Antriebsmaschine, dadurch gekennzeichnet, dass man als physikalische Grösse momentane Betriebsverhältnisse an Dieselmotorzylindern stellt, wie den Kraftstoff-Einspritzzeitpunkt und/oder die Kraftstoff-Einspritzmenge.

3. Verfahren, vorzugsweise nach mindestens einem der Ansprüche, wie nach einem der Ansprüche 1 oder 2, dadurch gekennzeichnet, dass man als physikalische Grösse die Erregung des Synchrongenerators stellt.

4. Verfahren, vorzugsweise nach mindestens einem der Ansprüche, wie nach einem der Ansprüche 1 bis 3, dadurch gekennzeichnet, dass man die Regelung frequenzselektiv auf der Frequenz des zu reduzierenden Pulsationsanteils vornimmt.

5. Verfahren, vorzugsweise nach mindestens einem der Ansprüche, wie nach Anspruch 4, dadurch gekennzeichnet, dass man die Frequenz des Anteils erfasst und damit die Selektivität der Regelung führt.

6. Verfahren, vorzugsweise nach mindestens einem der Ansprüche, wie nach einem der Ansprüche 1 bis 5, dadurch gekennzeichnet, dass man eine weitere netzseitig des Synchrongnerators erscheinende elektrische Grösse als weitere Regelgrösse erfasst, daraus und einer weiteren Führungsgrösse eine weitere Regeldifferenz ermittelt, und eine weitere physikalische Grösse an der Strecke in Funktion der weiteren Regeldifferenz in regelndem Sinne stellt.

7. Verfahren, vorzugsweise nach mindestens einem der Ansprüche, wie nach Anspruch 6, dadurch gekennzeichnet, dass man als die eine physikalische Grösse und die weitere physikalische Grösse dieselbe physikalische Grösse stellt.

8. Verfahren, vorzugsweise nach mindestens einem der Ansprüche, wie nach einem der Ansprüche 6 oder 7, dadurch gekennzeichnet, dass man die Regelung der einen Regelgrösse und die Regelung der weiteren Regelgrösse frequenzmässig entkoppelt, vorzugsweise die Regelung der einen Regelgrösse frequenzselektiv auf der Frequenz des zu reduzierenden Pulsations-Frequenzanteils vornimmt.

9. Verfahren, vorzugsweise nach mindestens einem der Ansprüche, wie nach einem der Ansprüche 6 bis 8, dadurch gekennzeichnet, dass man als weitere physikalische Grösse eine ausgangsseitig des Synchrongenerators erscheinende Impedanz stellt, wie einen Blindleistungskompensator.

10. Verfahren, vorzugsweise nach mindestens einem der Ansprüche, wie nach Anspruch 7, dadurch gekennzeichnet, dass man bei der Frequenz des zu reduzierenden Anteils voneinander abhängige Führungsgrössen für die Regelung der einen und der weiteren Regelgrösse vorgibt.

11. Verfahren, vorzugsweise nach mindestens einem der Ansprüche, wie nach einem der Ansprüche 1 bis 10, dadurch gekennzeichnet, dass man ein Wechselsignal mit einer Frequenz gleich der Frequenz des zu rcduzierenden Anteils erzeugt, damit die physikalische Grösse stellt und dabei Amplitude und/oder Phase des Wechselsignals in Funktion der Regeldifferenz stellt.

12. Verfahren, vorzugsweise nach mindestens einem der Ansprüche, wie nach Anspruch 11, dadurch gekennzeichnet, dass man die momentane Frequenz des zu reduzierenden Anteils erfasst und damit die Frequenz des Wechselsignals führt.

13. Verfahren, vorzugsweise nach mindestens einem der Ansprüche, wie nach einem der Ansprüche 11 oder 12, dadurch gekennzeichnet, dass man das Wechselsignal aus zwei gewichtet addierten, orthogonalen Wechselsignalanteilen erzeugt.

14. Verfahren, vorzugsweise nach mindestens einem der Ansprüche, wie nach einem der Ansprüche 11 bis 13, dadurch gekennzeichnet, dass man sukzessive Phase und Amplitude des Wechselsignals stellt, dabei die Regeldifferenz beobachtet und sukzessive minimalisiert.

15. Verfahren, vorzugsweise nach mindestens einem der Ansprüche, wie nach Anspruch 14, dadurch gekennzeichnet, dass man an der Regeldifferenz einen Frequenzanteil der Frequenz entsprechend derjenigen des Pulsationsanteils für die Stellung der Phase und der Amplitude des Wechselsignals beobachtet.

16. Verfahren, vorzugsweise nach mindestens einem der Ansprüche, wie nach einem der Ansprüche 11 bis 15, dadurch gekennzeichnet, dass man das Wechselsignal durch Programmierung der Ausdrücke

$$\ddot{z} + \omega_{pn}^2 = \Delta(\omega_{pn}) \quad (1)$$

$$u' = \alpha_1 \dot{z} + \alpha_2 z \quad (2)$$

erzeugt, wobei bedeuten:

$\omega_{pn}$: die Kreisfrequenz des zu reduzierenden Pulsationsanteils,

$\Delta(\omega_{pn})$: die Regeldifferenz,

$z$: eine Hilfszustandsgrösse, $\dot{z}$ und $\ddot{z}$ deren erste bzw. zweite zeitliche Ableitung,

$\alpha_1$, $\alpha_2$: Koeffizienten, vorzugsweise streckenspezifisch einstellbar,

$u'$: das Wechselsignal zum Stellen der physikalischen Grössen.

17. Verfahren, vorzugsweise nach mindestens einem der Ansprüche, wie nach einem der Ansprüche 1 bis 16, dadurch gekennzeichnet, dass man die Regelung im Zustandsraum vornimmt und mindestens die Regelgrösse bzw. die Regelgrössen als Ausgangsgrösse(n) der Strecke, mindestens die physikalische Grösse(n) als Eingangsgrösse(n) dieser Strecke einsetzt.

18. Verfahren, vorzugsweise nach mindestens einem der Ansrpüche, wie nach Anspruch 17, dadurch gekennzeichnet, dass man über einen Beobachter aus der Eingangsgrösse bzw. den Eingangsgrössen und der Ausgangsgrösse bzw. den Ausgangsgrössen die Streckenzustandsgrössen ermittelt.

19. Anordnung zur Reduzierung mindestens eines Frequenzanteils einer periodischen Pulsation mindestens einer elektrischen Grösse am Ausgang eines mittels einer Antriebsmaschine getriebenen Synchrongenerators, wobei die Grundfrequenz der zu reduzierenden Pulsation von der synchrongeneratoreigenen Frequenz abweicht, dadurch gekennzeichnet, dass bei Antrieb des Synchrongenerators mit einem pulsierenden Antriebsmoment als Anregung dessen Grundfrequenz derjenigen der Pulsation entspricht, eine mindestens auf der Frequenz des zu reduzierenden Anteils wirksame Regelung vorgesehen ist, mit

a) einer eingangsseitig mit der aus Antriebsmaschine, Synchrongenerator und davon gespiesenem Netz gebildeten Strecke verbundenen Aufnahmeeinrichtung zur Aufnahme mindestens eines Signals als Regelgrössensignal, das mit dem zu reduzierenden Anteil in einem Abhängigkeitsverhältnis steht,

b) einer mit dem Ausgang der Aufnahmeeinrichtung verbundenen Reglereinrichtung,

c) mindestens einer mit dem Ausgang der Reglereinrichtung verbundenen Stellereinrichtung, die ausgangsseitig mindestens eine physikalische Grösse an der Strecke stellt, von der mindestens der Anteil abhängt.

20. Anordnung, vorzugsweise nach mindestens einem der Ansprüche, wie nach Anspruch 19 zur Reduzierung des Frequenzanteils am Ausgang eines dieselmotorgetriebenen Synchrongenerators, dadurch gekennzeichnet, dass die Stellereinrichtung eine steuerbare Einspritzanlage für den Dieselmotor umfasst.

21. Anordnung, vorzugsweise nach mindestens einem der Ansprüche, wie nach einem der Ansprüche 19 oder 20, dadurch gekennzeichnet, dass die Stellereinrichtung mindestens auf die Erregung des Synchrongenerators wirkt.

22. Anordnung, vorzugsweise nach mindestens einem der Ansprüche, wie nach einem der Ansprüche 19 bis 21, dadurch gekennzeichnet, dass die Stellereinrichtung auf die ausgangsseitig des Synchrongenerators erscheinende elektrische Impedanz wirkt, vorzugsweise auf einen steuerbaren Blindleistungskompensator.

23. Anordnung, vorzugsweise nach mindestens einem der Ansprüche, wie nach einem der Ansprüche 19 bis 22, dadurch gekennzeichnet, dass die Reglereinrichtung einen auf der Frequenz des zu reduzierenden Anteils schwingenden, vom Ausgang der Aufnahmeeinrichtung angesteuerten Schwinger umfasst, der auf den Reglerausgang wirkt.

24. Anordnung, vorzugsweise nach mindestens einem der Ansprüche, wie nach Anspruch 23, dadurch gekennzeichnet, dass die Aufnahmeeinrichtung eine auf der Frequenz des zu reduzierenden Anteils selektiv arbeitende Amplitudenbestimmungseinrichtung umfasst, deren Ausgang mindestens mit einem Amplitudensteuereingang des Schwingers wirkverbunden ist.

25. Anordnung, vorzugsweise nach mindestens einem der Ansprüche, wie nach einem der Ansprüche 23 oder 24, dadurch gekennzeichnet, dass eine Steuereinheit vorgesehen ist, die die Amplitude der Regelgrössen mindestens auf der Frequenz des zu reduzierenden Anteils zu sukzessiven Zeitpunkten miteinander vergleicht und selektiv auf einen Phasen-und/oder einen Amplitudensteuereingang des Schwingers eingreift.

26. Anordnung, vorzugsweise nach mindestens einem der Ansprüche, wie nach einem der Ansprüche 19 bis 25, dadurch gekennzeichnet, dass die Regelung mindestens eine frequenzselektiv auf der Frequenz des zu reduzierenden Anteils arbeitende Signalübertragungs-und/oder Signalerzeugungseinheit umfasst, und dass eine Frequenzmesseinrichtung für die Frequenz des zu reduzierenden Anteils vorgesehen ist, deren Ausgang auf einen Frequenz-Steuereingang für die selektierte Frequenz an der frequenzselektiv arbeitenden Einheit wirkt.

27. Anordnung, vorzugsweise nach mindestens einem der Ansprüche, wie nach einem der Ansprüche 23 bis 26, dadurch gekennzeichnet, dass die Aufnahmeeinrichtung an der Strecke ein weiteres Signal, das mit einer weiteren zu regelnden elektrischen Grösse am Ausgang des Synchrongenerators in einem Abhängigkeitsverhältnis steht, erfasst, und damit ausgangsseitig auf eine parallel zum Schwinger wirkende Reglerstufe an der Reglereinrichtung wirkt.

28. Anordnung, vorzugsweise nach mindesten einem der Ansprüche, wie nach Anspruch 27, dadurch gekennzeichnet, dass eine Selektionseinheit zur Bestimmung des zu reduzierenden Anteils vorgesehen ist.

29. Anordnung, vorzugsweise nach mindestens einem der Ansprüche, wie nach einem der Ansprüche 19 bis 28, dadurch gekennzeichnet, dass die Aufnahmeeinrichtung die elektrische Grösse am Ausgang des Synchrongenerators selbst als Regelgrösse erfasst.

30. Anordnung, vorzugsweise nach mindestens einem der Ansprüche, wie nach einem der Ansprüche 23 bis 29, dadurch gekennzeichnet, dass der Schwinger eine Schwingungs-Differentialgleichungsstruktur umfasst.

31. Anordnung, vorzugsweise nach mindestens einem der Ansprüche. wie nach einem der Ansprüche 23 bis 30, dadurch gekennzeichnet, dass der Schwinger zwei orthogonale Schwingungsanteile erzeugt, die, gewichtet, an einer Summationseinheit addiert werden.

32. Anordnung, vorzugsweise nach mindestens einem der Ansprüche, wie nach einem der Ansprüche 19 bis 31, dadurch gekennzeichnet, dass die Reglereinrichtung einen Zustandsregler umfasst.

33. Anordnung, vorzugsweise nach mindestens einem der Ansprüche, wie nach Anspruch 32, dadurch gekennzeichnet, dass ein Beobachter vorgesehen ist, der aus Ausgangssignalen der Aufnahmeeinrichtung sowie Signalen entsprechend gestellten physikalischen Grössen als Eingangsvektor, als Modell der Strecke, den Streckenzustandsvektor bestimmt.

34. Anordnung, vorzugsweise nach mindestens einem der Ansprüche, wie nach einem der Ansprüche 20 bis 33, dadurch gekennzeichnet, dass die Aufnahmeeinrichtung den Anteil von Spannung und/oder Leistung am Synchrongeneratorausgang aufnimmt.

35. Anordnung, vorzugsweise nach mindestens einem der Ansprüche, wie nach einem der Ansprüche 19 bis 34, dadurch gekennzeichnet, dass die Aufnahmeeinrichtung ein weiteres Signal als Regelgrössensignal aufnimmt, das mit einer weiteren elektrischen Grösse am Ausgang des Synchrongenerators in einem Abhängigkeitsverhältnis steht, und dass die Reglereinrichtung auf mindestens eine weitere Stelleinrichtung wirkt, die ausgangsseitig eine weitere physikalische Grösse an der Strecke stellt, wobei die eine physikalische Grösse und die weiteren physikalischen Grössen dieselbe Grösse oder verschiedene Grössen an der Strecke sind.

36. Anwendung des Verfahrens nach einem der Ansprüche 1 bis 18 bzw. der Anordnung nach einem der Ansprüche 19 bis 35 für dieselmotor- oder windturbinengetriebene Synchrongrossgeneratoren.

FIG.1

FIG.2a

FIG.2b

FIG.2c

FIG.3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 080 559 (G.F. WRIGHT et al.) <br> * Figur 1; Zusammenfassung * | 1,19 | H 02 P 9/48 <br> H 02 P 9/04 |
| A | US-A-4 463 306 (F.P. DE MELLO et al.) <br> * Figur 1, Beschreibung * | 1,19 | |
| A | US-A-4 413 223 (G.B. YUNDT et al.) | | |
| A | IEEE, 1980 IECI PROCEEDINGS, "APPLICATIONS OF MINI AND MICROCOMPUTERS", Philadelphia, 17.-20. März 1980, IEEE, New York, US, G.R. PHILLIPS: "A microprocessor-based engine/generator control system", Seiten 377-380 <br> * Insgesamt * | 1,2,19, 20 | |
| A | IEEE TRANSACTIONS ON POWER APPARATUS AND SYSTEMS, Band PAS-103, Nr. 4, April 1984, Seiten 886-892, IEEE, New York, US, E.N. HINRICHSEN: "Controls for variable pitch wind turbine generators" <br> * Seiten 886-892 * | | |

RECHERCHIERTE SACHGEBIETE (Int. Cl.4)

H 02 P 9/00

Der vorliegende Recherchenbericht wurde für alle Patentansprüche erstellt

| Recherchenort | Abschlußdatum der Recherche | Prüfer |
|---|---|---|
| DEN HAAG | 05-02-1988 | BEYER F. |